# EUROPEAN PATENT SPECIFICATION

(11) **EP 0 632 602 B1**
(45) Date of publication and mention of the grant of the patent: **19.12.2001**
(21) Application number: 94108059.0
(22) Date of filing: 26.05.1994
(51) Int. Cl.: H04B 3/54

(54) **Power line communications adapter**
Netzleitungsübertragungssystemadapter
Adapteur pour communication par le réseau électrique

(30) Priority: 31.05.1993 ES 9301191
(43) Date of publication of application: 04.01.1995
(73) Proprietor: ALCATEL, 75008 Paris (FR)
(72) Inventor: Alonso Ruiz, Francisco Javier, ES-28006 Madrid (ES); Dominguez Sanchez, Juan Jose, ES-28019 Madrid (ES); Navarro Sebastia, Rafael, ES-28003 Madrid (ES)
(74) Representative: Lamoureux, Bernard

(56) References cited:
- GB-A- 2 174 273
- US-A- 4 646 319
- US-A- 5 033 062

## Description

This invention, as stated in the title of this document, consists of a communications adapter for data transmission by low and medium voltage electrical distribution network, the object being to permit data links to be set up over low and medium voltage electrical distribution networks in systems that employ protocols and transmission equipments not adapted to this transmission medium.

Consequently, by means of the invention, data are sent over the electrical distribution networks for their application in remote operation systems, control and data acquisition systems, and remote control and measurement systems for these electrical distribution networks.

Normal practice in communications in the field of remote operation and control systems has employed different technologies and transmission media, each one offering a series of advantages and disadvantages but with none being clearly superior to the others. In general it may be considered that the transmission media employed can be divided into those that use a physical medium of transmission (e.g. dedicated telephone tielines or the public switching network, optical fibre, coaxial cable, electrical distribution networks, etc.) and those that do not use a physical medium (e.g. radio or satellite links, etc.). The advantages and disadvantages of each of these have been described in the comparative tables contained in the article entitled "Automating the power grid" by Dennis J. Gaushell, IEEE Spectrum, October 1985, pages 39 to 45.

In general it may be said that radio-based systems have a greater range than those using physical media. In addition, it is obvious that extending systems that do not use physical media is less costly, as the laying of new communications lines is always expensive and complicated.

Nevertheless, the transmission signalling rates in radio systems are always less than in those that use physical media.

It should also be kept in mind that the installation of radio equipment is subject to legislation and, in certain areas, its use is made impossible because of frequency saturation.

The use of the existing medium and low electrical distribution networks, as the physical media of transmission for carrying out remote control and measurement operations on electrical distribution networks, is extremely attractive because the electricity utilities actually own them and, in addition, complete coverage is guaranteed because they connect precisely with the locations where the remote commands have to be obeyed. The main drawback offered by their use lies in the need to use protocols and transmission equipment specially adapted to the transmission medium (special data assembly, specific line interfaces, etc.), these being unavoidable for the cases of systems already in service and that have to be extended.

GB-A-2174273 discloses data communication along a low voltage mains distribution wiring or network. A communication adapter comprises an interface at one end of the data terminal equipment and a microprocessor at the other end. An RS232 bus is carrying data in both directions, and a modem is connected to the distribution mains network through a line interface for acquiring data packages to be sent and sensing data packages to be received from same. This document does not disclose any use of conversion means for analogue and digital signals.

US-A-5,033,062 teaches a digital modem connected to a computerised branch exchange. Data from data devices connected to the computerised branch exchange is sent to the digital modem. The data is converted to digitally encoded voice data according to a preselected communication protocol, and returned to the computerised branch exchange using the digital voice data channel. From the computerised branch exchange, the digital voice data is sent to a CODEC, which is attached to a telephone voice line. Incoming analogue signals are digitised, and routed to the digital modem for conversion from digitally encoded voice data to standard digital data, and then routed to the data device through the computerised branch exchange. This document does not disclose any use of data packets neither does it. disclose a control unit assembling and disassembling data packets.

It would be desirable for a communication system to provide a communications means including means to convert digital data to analogue form for transmission over a main distribution network. And control means to assembling and disassembling data packets suitable for communication over the main distribution network.

### CARACTERISATION OF THE INVENTION

The invention consists of a communications adapter for data transmission by low and medium voltage electrical distribution networks between a data terminal equipment or remote telecommand unit located at one extremity and another terminal or similar unit located at the other extremity, permitting the setting up of data links over the electrical distribution networks in systems that use protocols and transmission equipment not specially adapted to this transmission medium; it being characterised in that it incorporates data conversion means connected at one extremity to the data terminal equipment and at the other extremity to a control unit via a first bi-directional bus, and which converts and adapts the signals of an analogue bus or adapts the signals of a digital bus, for both transmission directions, interchanged between the data terminal equipment and the control unit; in that the control unit is connected with a modem and medium/low voltage interface via a second bi-directional bus, and assembles the data packets to be transmitted to and disassembles the. data packets received from the medium/low voltage electrical distribution network; and in that the modem and medium/low voltage interface is connected to the medium low voltage electrical distribution network by means of input/output terminals.

The data conversion means are characterised in that they comprise a bidirectional digital interface that is joined to the data terminal equipment via the digital signal bus, and to the control unit, via the first bidirectional bus; all this being done to isolate physically the digital signals present at is two extremities. They also comprise a bidirectional analogue interface that is joined to the data terminal equipment via the analogue signal bus and to at least one modem via a third bidirectional bus; this being with the objective of converting the analogue information signals present on the third bidirectional bus into digital signals on a fourth bidirectional bus, and vice versa, this fourth bidirectional bus forming part of the first bidirectional bus.

The bidirectional analogue interface is characterised in that it comprises means for selecting the transmission direction at the remote terminal unit, which receive a transmission control signal towards the remote terminal unit, that forms part of the first bidirectional bus, and which in turn determines the position of an open or closed contact as indication of the send or receive state, and a contact, normally open, that closes when the transmission control signal towards the remote terminal unit indicates that transmission is towards this unit. It also comprises a first amplifier that amplifies the analogue signal to be transmitted to the remote terminal unit coming from any of the modems included in the data conversion means; as well as a first transformer that receives the signal coming from the output of the first amplifier and whose output is connected to the remote terminal unit via a wire pair. It also incorporates a second transformer that receives the signal coming from the remote terminal unit and whose output is connected to the input of a second amplifier that amplifies the signal at its input to produce an output signal that is sent to any of the modems included in the data conversion means.

The control unit is characterised in that it comprises a microcontroller that is linked to the data conversion means via part of the signals on the first bidirectional bus, and to the modem and medium/low voltage interface via part of the second bidirectional bus, which serves to perform the control functions of this control unit. It is also provided with a ROM memory module, a RAM memory module and an input/output units module, all of which are connected to the microprocessor via a fifth bidirectional bus; and, in addition, it comprises a function selection module connected to the input/output units module for configuring the system according to the operational modes stored in the ROM memory module.

The modem and medium/low voltage interface is characterised in that it comprises means to select the transmission direction towards the distribution network that receive a transmission control signal towards the distribution network and whose output corresponds to a contact that is closed when the transmission is made towards the distribution network over the input/output terminals. It also comprises a modulator that receives the transmission control signal towards the distribution network, in order to activate the modulator, and the digital signal to be sent to modulate a carrier of a determined frequency, the output of the modulator being sent to a third amplifier, whose output, in turn, is applied to a third coupling transformer whose output terminals are connected to the input/output terminals of the communications adapter. It also comprises a fourth transformer that receives the signal present at the input/output terminals, that is connected to at least one bandpass filter to which it applies its output signal, and each one of which is tuned to one of the possible, previously defined, operating frequencies of the modulator on the side of the remote data terminal equipment; and it also comprises a fourth amplifier that amplifies the input signal coming from any of the bandpass filters and whose output is applied to a demodulator that demodulates the signal coming from the amplifier in order to recover the received digital data signal received from the remote data terminal equipment.

The data transmission is achieved by means of packets of information transmitted asynchronously and the modulation used is frequency shift keying (FSK).

The input/output terminals are connected to the medium/low voltage distribution network via a coupling element in order to achieve greater isolation of the electrical distribution network with respect to the communications adapter.

Consequently, through the invention, it is possible to avoid the excessive cost of installing new lines, as well as potential problems of radioelectric saturation or of an administrative nature produced through the installation of new radiofrequency systems.

For remote control and measurement systems For electrical distribution networks, it represents a major advance because the transmission medium used is the actual physical support already installed by the electricity utilities; it offers the possibility of unrestricted growth and total coverage of the devices to be operated remotely, in contrast with the limitations of other communications systems and media.

With the invention there is the possibility of feature degradation due to small delays because of processing and a slight increase in the error rates resulting from the particularly noisy nature of the medium and low voltage distribution networks.

However none of these inconveniences is critical as the information traffic is not normally high and the response times of the equipments that have to be interconnected are not generally specially tight.

Below, to facilitate a better understanding of this document and forming an integral part thereof, a series of figures are attached in which, by way of illustration and in no way limiting, the object of the invention is shown.
- Figure 1 shows a functional block diagram of the communications adapter for data transmission by low and medium voltage electrical distribution network, according to the invention,
- figure 2 shows a functional block diagram of the control unit that is included in the communications adapter of the invention,
- figure 3 shows a functional block diagram of the bidirectional analogue interface included in the data conversion means that form part of the communications adapter, and
- figure 4 shows a block diagram of the modem and medium/low voltage interface included in the communications adapter of the invention.

### DESCRIPTION OF THE INVENTION

Below a description is given of the invention based on the figures commented above.

Thus, the main object of this invention consists in facilitating the setting up of data links over the low and medium voltage electrical distribution network between a data terminal equipment or remote telecommand unit located at one extremity and another terminal equipment or similar unit located at the other extremity, which do not use transmission equipments and protocols specially adapted to this transmission medium.

The preceding objectives are implemented by means of the communications adapter 1 of the invention, for which the latter is equipped with a data conversion circuit 2 that is connected to the data terminal equipment at one extremity and to a control unit 3 at the other.

The data conversion circuit 2 is equipped with a bidirectional digital interface 21 and with a bidirectional analogue interface 22, which are connected over a digital bus C1 and an analogue bus C2, respectively, to the data terminal equipment.

The bidirectional digital interface 21 is connected over a first bidirectional bus C3 to the control unit 3.

The bidirectional analogue interface 22 is connected over a third bidirectional bus C4 to two modems 23 and 24, likewise belonging to the data conversion circuit 2, which are connected to the control unit 3 over a fourth bidirectional bus C5 which forms part of the first bidirectional bus C3.

The communications adapter 1 is fitted with a modem and medium/low voltage interface 4 through which the connection is made to the electrical distribution network by means of input/output terminals C7.

The modem and medium/low voltage interface 4 is connected to the control unit 3 over a second bidirectional bus C6.

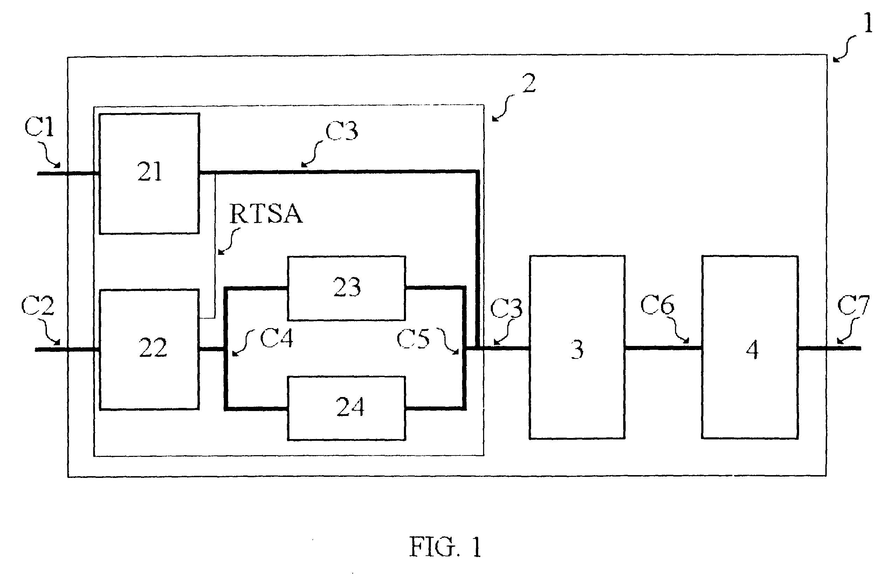

A description now follows of the operation of the adapter making reference to the functional blocks shown in figure 1.

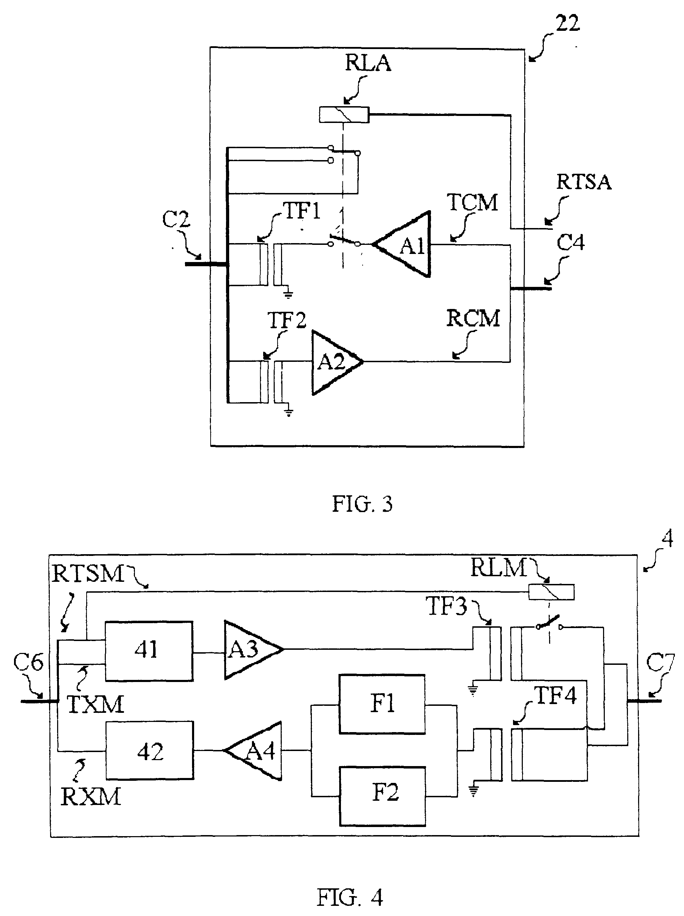

The bidirectional analogue interface 22 (figure 3) includes a signal transformer TF2 which is connected to an amplifier A2. The input impedance can be selected between 600 Ω and high impedance. Once the signal has been amplified, it is applied to a modem 23 or 24, as per the Recommendations V.23-BELL 202 or R.38-A respectively, depending on the working mode.

The analogue output signal is produced by the modem 23 or 24 according to the recommendations indicated and is amplified in the amplifier A1 and, through the transformer TF1 and a contact of the relay RLA (normally open), is applied externally via bus C2. The relay RLA is controlled by a signal RTSA that forms part of the first bidirectional bus C3. In this way the output signal across the terminals of the transformer TF1 is on high impedance until there is an analogue signal present on TCM of the bus C3, which has to be indicated by means of a control signal RTSA.

The equipment also has a double contact on the same relay RLA that can be used as a signal to activate a radio transmitter (PTT) in the event that it is necessary for a radio transmitter to share use with a data terminal equipment, as shall be explained below when commenting the operating modes in accordance with how the equipment is connected.

The digital signal input/output is constituted via the bidirectional digital interface 21, which conforms with the V.24 and V.28 Recommendations. This interface is optional since, if used, the equipment will provide the facilities of a conventional modem. The bidirectional digital interface 21 is included as an additional facility for the case where its use simplifies system installation and exploitation.

The bidirectional digital interface 21 communicates with the control unit 3 via signals established at TTL levels and over the first bidirectional bus C3 and, externally, at levels compatible with the V.28 Recommendation of the CCITT over the digital signal bus C1.

The modems 23 and 24 correspond with Recommendations V.23-BELL 202 and R.38-A respectively. The modes in which these modems can he configured conform with the recommendations already mentioned.

The modems demodulate the RCM signal, already mentioned, coming from the bidirectional analogue interface 22 and apply the received data signal to the control unit along with a carrier indication.

The digital data received over the distribution network is received by the control unit 3, modulated and passed to the analogue interface 22.

Modem operation is half-duplex and the modulation/demodulation used is frequency shift keying (FSK).

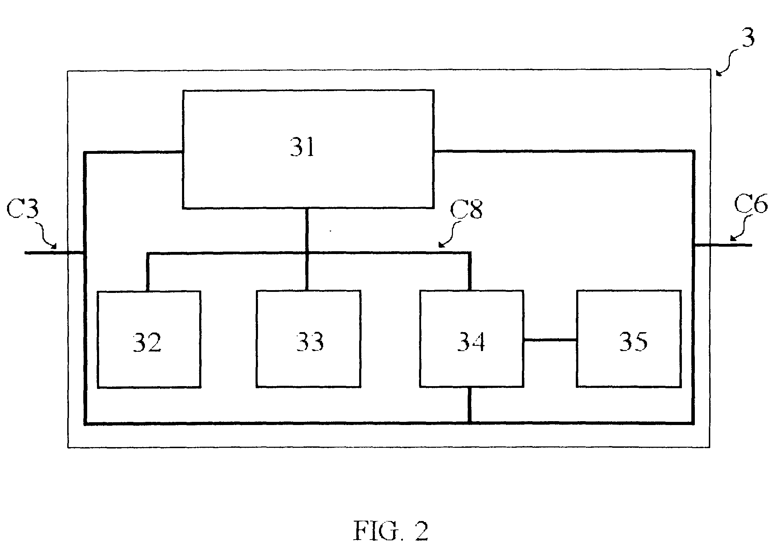

The control unit 3 (figure 2) consists of a microcontroller 31 that is connected to a ROM memory 32, to a RAM memory 33, and to a number of input/output ports 34.

The microcontroller 31 has the corresponding buses, as well as two asynchronous channels, two timers and a reinitialisation input.

In addition, it has a quartz crystal, the frequency being divided in order to obtain the internal clock for the microcontroller.

The ROM memory 32 stores the control program and the initialisation data of the equipment.

On the other hand, the RAM memory 33 stores the auxiliary data obtained in the initialisation stage and the communications buffer.

The input/output ports 34 work as peripherals of the microcontroller 31 and can be programmed to work as input or output. A certain number of these ports are programmed as inputs and are connected to microswitches 35 that are used to program externally the different modes and options of the different operational modes and options of the equipment, just as will be described below. The rest of the ports perform the function of acting on the control and/or data signals of the modems 23 and 24 and the interfaces 21 and 22 through the connections C4 and C5 corresponding to the third and fourth bidirectional buses already commented.

The reference C8 refers to the fifth bidirectional bus over which communications take place between the microprocessor and the different elements connected to it and already indicated.

Just as was already commented, the control unit 3 is connected to a modem and medium/low voltage interface 4 which has (figure 4) a modulator 41 that performs the modulation for which it receives the digital data transmission signal TXM as well as the request to send signal RTSM for activating the transmission. This signal also controls a relay RLM which, by means of a normally open contact, keeps the connection on high impedance until RTSM is activated and transmission starts.

The modulator 41 is connected to an amplifier A3, that amplifies the modulated signal.

In addition, the amplifier A3 is connected to a transformer TF3, which is tuned to the carrier frequency and performs the output coupling.

The modem and medium/low voltage interface 4 includes a signal transformer TF4 through which reception takes place and which is connected to a bandpass filter F1 or F2 for the purpose of permitting selection of two transmission frequencies, for which reason they are centered on the carrier frequencies.

These bandpass filters F1 and F2 are connected to an amplifier A4 which amplifies the signal and which, in turn, is connected to a demodulator 42 at whose output the demodulated digital signal of the received data RXM is received, which forms part of the bus C6.

The output voltage can be selected from a range of values which are kept constant, independent of the values of the impedance being presented by the medium / low voltage distribution network, as long as its modulus exceeds a certain value.

The equipment can work with different data formats, which can be grouped into two basic classes: character universal asynchronous formats and asynchronous formats specific to the General Electric telecommand protocols.

Based on the description given, the equipment operating modes are determined, on the one hand, by the positions in which the microswitches 35 are put and, on the other, by the connections that are made externally with the data terminal equipment or the remote telecommand unit and radio transmitter.

The different operating modes according to the internal configuration of the equipment are mutually exclusive and are determined by the possible configurations of modems 23 and 24 via the programming done; these modes are as follows:
A) Normal mode 1. If this operating mode is selected, permissible data are those with character universal asynchronous formats.
   To the characters coming from the data terminal equipment or remote telecommand unit a header is added for them to be sent over the medium and low voltage distribution network. The receiving equipment removes this header before applying the data to the data terminal equipment or receiving remote telecommand unit. The end of a data block is indicated to the receiving equipment by means of a character containing an error in the framing.
   The transmitting equipment puts a time-out circuit into operation whenever it receives a character valid for transmitting. If, once the time has expired, no more characters are received for transmitting, it sends an end-of-frame character over the medium and low voltage line.
   The receiving equipment waits to receive a header before delivering the data to the data terminal equipment or receiving remote telecommand unit. Once the header has been detected, it also brings a time-out circuit into operation whenever a correct character or a header is received. If, after this time no correct character or end-of-frame character is received, it assumes the data block has concluded and stands by for reception of a new header. When an end-of-frame character is received, a time-out is started which, once concluded, stands by to receive a new header.
B) Normal mode 2. If this operating mode is selected, the send or receive mode is adopted according to the state of a control signal of the first bidirectional bus C3. The s of data admitted by this mode are those corresponding to character universal asynchronous formats.
   From the moment when activation is detected to enter the send mode, the modem and medium/low voltage interface 4 is activated by means of the RTSM signal, and the header mentioned in the preceding paragraph is sent. Just as with normal mode 1, at the same time that the data terminal equipment or remote telecommand unit delivers a valid character to the equipment, the latter puts a time-out circuit into operation. If the time runs out without more characters being received from the data terminal equipment or remote telecommand unit, the equipment sends an end-of-frame character and, immediately, a new header, bringing a new time-out into operation. The receiving equipment activates a timer whenever it receives a header or a correct character. In this way carrier detection at the receiving equipment does not change state as long as the sending equipment does not do so. When this change occurs, the sending equipment follows it by sending the end-of-frame character without a header. From this moment, the receiver puts a time-out into operation to inhibit carrier detection.
C) 31-bit mode. In this operating mode, transmission over the low and medium voltage distribution network starts when the data of the first bidirectional bus C3 appear. The types of data admitted in this mode are those corresponding to the 31-bit asynchronous format.
   To the data coming from the data terminal equipment or remote telecommand unit, a header is added before sending the 31-bit frame over the low and medium voltage distribution network. Each time the sending equipment receives a complete 31-bit frame for transmitting over the low and medium voltage distribution network, it activates a time-out and proceeds to send the frame. If the next frame arrives before the time-out is completed, it is transmitted without a header.
   The receiver detects a header and removes it before applying the data to the data terminal equipment or receiving remote telecommand unit. In addition, another time-out is brought into operation whenever a frame is received, checking for the presence of at least one stop bit. At the end of this time-out, no frame is admitted that is not preceded by a header.
D) Test mode. When the equipment is in this mode, a self-checking routine functions continuously under the following conditions:
   - Input/output loopback at the analogue bidirectional interface 22 (bus C2) or input/output loopback at the digital bidirectional interface 21 (bus C1).
   - Loopback at the connection to the low and medium voltage distribution network (bus C7).
   - Test of each position in the RAM memory 33.
   - Test of the configuration microswitches 35.

   To check the test diagnostics, it is necessary to connect an asynchronous terminal to the digital bidirectional interface 21 via the bus C1.
E) Setting modes. When the equipment is configured in any of the setting modes, the microcontroller 31 provides a continuous frequency for each of the data signals.

Concerning the operating mode according to the connection, it is to be pointed out that the adapter of the invention can work as a modem for data transmission over the low and medium voltage distribution network, thereby replacing another of modem.

Moreover, it can work in parallel with a radio transmitter or telephone line modem.

The last mode of operation according to the connection permits the data terminal equipment to communicate with a second remote telecommand unit in two stages. Between the first and the second remote telecommand units, transmission takes place over the low and medium voltage distribution network. The transmitter or modem is shared by the two remote telecommand units for communicating with the data terminal equipment.

Consequently, by means of the invention, it is possible to transmit analogue and digital data signals over the low and medium voltage distribution network by means of transmission equipments that are not specially adapted for this transmission medium.

## Claims

1. COMMUNICATIONS ADAPTER FOR DATA TRANSMISSION BY LOW AND MEDIUM VOLTAGE ELECTRICAL DISTRIBUTION NETWORKS between a data terminal equipment or remote telecommand unit located at one extremity and another terminal equipment or similar unit located at the other extremity and **characterised:**
- **in that** it comprises data conversion means (2) connected at one extremity to the data terminal equipment and at the other extremity to a control unit (3) via a first bidirectional bus (C3), and which converts and adapts the signals on an analogue bus (C2) or adapts the signals on a digital bus (C1), for both transmission directions, interchanged between the data terminal equipment and the control unit (3);
- **in that** the control unit (3) is connected with a modem and medium/low voltage interface (4) via a second bidirectional bus (C6), and assembles the data packets to be transmitted to and disassembles the data packets received from the medium/low voltage electrical distribution network; and
- **in that** the modem and medium/low voltage interface (4) is connected to the medium/low voltage electrical distribution network through input/output terminals (C7).

2. COMMUNICATIONS ADAPTER according to claim 1, **characterised in that** the data conversion means (2) comprises:
- a bidirectional digital interface (21) that is joined to the data terminal equipment via the digital signal bus (C1) and to the control unit (3) via the first bidirectional bus (C3), this being in order to isolate physically the digital signals present at its two extremities; and
- a bidirectional analogue interface (22) that is joined to the data terminal equipment via the analogue signal bus (C2) and to at least one modem (23, 24) via a third bidirectional bus (C4), this being with the object of converting the analogue information signals, present on the third bidirectional bus (C4), into digital signals on a fourth bidirectional bus (C5) and vice versa, this fourth bidirectional bus (C5) forming part of the first bidirectional bus (C3).

3. COMMUNICATIONS ADAPTER according to claim 2, **characterised in that** the bidirectional analogue interface (22) comprises:
- means for selecting the transmission direction at the remote terminal unit (RLA), which receive a transmission control signal towards the remote terminal unit (RTSA), which forms part of the first bidirectional bus (C3), and which in turn determines the position of an open or closed contact as an indication of the send or receive state, and a contact, normally open, that closes when the transmission control signal towards the remote terminal unit (RTSA) indicates that transmission is towards this unit;
- a first amplifier (A1) which amplifies the analogue signal to be sent (TCM) towards the remote terminal unit coming from any of the modems (23, 24) included in the data conversion means (2);
- a first transformer (TF1) which receives the signal coming from the output of the first amplifier (A1) and the output of which is connected to the remote terminal unit via a wire pair; and
- a second transformer (TF2) which receives the signal coming from the remote terminal unit and whose output is connected to the input of a second amplifier (A2) which amplifies the signal at its input and produces a signal at its output (RCM) that is sent to any of the modems (23, 24) included in the data conversion means (2).

4. COMMUNICATIONS ADAPTER according to claim 1, **characterised in that** the control unit (3) comprises:
- a microcontroller (31) which is joined to the data conversion means (2) via part of the signals on the first bidirectional bus (C3), and to the modem and medium/low voltage interface (4) via part of the second bidirectional bus (C6), serving to perform the control functions of said control unit (3);
- a ROM memory module (32), a RAM memory module (33), and an input/output units module (34) all of which are connected to the microcontroller (31) via a fifth bidirectional bus (C8); and
- a function selection module (35) connected to the input/output units module (34) for configuring the system according to the operational modes stored in the ROM memory module (32).

5. COMMUNICATIONS ADAPTER according to claim 1, **characterised in that** the modem and medium/low voltage interface (4) comprises:
- means to select the direction of transmission towards the distribution network (RLM) which receive a transmission control signal towards the distribution network (RTSM) and whose output corresponds to a contact that is closed when transmission is made towards the distribution network over the input/output terminals (C7);
- a modulator (41) that receives the transmission control signal towards the distribution network (RTSM), in order to activate the modulator (41), and the digital signal to be sent (TXM) to modulate a carrier of a determined frequency, the output of the modulator being applied to a third amplifier (A3), whose output is in turn applied to a third coupling transformer (TF3) whose terminals are connected to the input/output terminals (C7) of the communications adapter;
- a fourth transformer (TF4) which receives the signal present on the input/output terminals (C7);
- at least one bandpass filter (F1, F2) which receives the output signal coming from the fourth transformer (TF4), each tuned to one of the possible previously defined operating frequencies of the modulator on the side of the remote data terminal equipment; and
- a fourth amplifier (A4) which amplifies the filtered signal coming from any of the bandpass filters (F1, F2) and whose output is sent to a demodulator (42) that demodulates the signal coming from the amplifier (A4) and recover the received digital data signal (RXM) from the remote data terminal equipment.

6. COMMUNICATIONS ADAPTER according to claim 5, **characterised in that** the modulator (41) performs a frequency shift keying modulation, FSK, and the demodulator (42) demodulates signals of same kind.

7. COMMUNICATIONS ADAPTER according to claim 1, **characterised in that** the data transmission is carried out by means of asynchronously transmitted data packets.

8. COMMUNICATIONS ADAPTER according to claim 1, **characterised in that** the input/output terminals (C7) are connected to the medium/low voltage distribution network through a coupling device in order to obtain a better isolation of the electrical distribution network with respect to the communications adapter.

## Patentansprüche

1. Kommunikationsadapter zur Datenübertragung durch elektrische Verteilungsnetze mit niedriger und mittlerer Spannung zwischen einer Datenendgerät-Ausrüstung oder einer entfernten Fernsteuereinheit, die sich an einem Ende befindet, und einer weiteren Fernsteuereinheit oder ähnlichen Einheit, die sich am anderen Ende befindet, und **dadurch gekennzeichnet,**
**dass** sie eine Datenumwandlungseinrichtung (2) umfasst, die an einem Ende mit der Datenendgerät-Ausrüstung und am anderen Ende über eine bidirektionalen Bus (C3) mit einer Steuereinheit (3) verbunden ist und die für beide Übertragungsrichtungen die Signale auf einem analogen Bus (C2) umwandelt und anpasst oder das Signal auf einem digitalen Bus (C1) anpasst, die zwischen der Datenendgerät-Ausrüstung und der Steuereinheit (3) ausgetauscht werden;
**dass** die Steuereinheit (3) über einen zweiten bidirektionalen Bus (C6) mit einem Modem und einer Schnittstelle (4) für mittlere/niedrige Spannung verbunden ist und die zum elektrischen Verteilungsnetz mit mittlerer/niedriger Spannung zu übertragenden Datenpakete zusammensetzt und die von ihm her empfangenen Datenpakete auseinander nimmt; und
**dass** das Modem und die Schnittstelle (4) mit mittlerer/niedriger Spannung über Eingangs/Ausgangsanschlüsse (C7) mit dem elektrischen Verteilungsnetz mit mittlerer/niedriger Spannung verbunden ist.

2. Kommunikationsadapter nach Anspruch 1, **dadurch gekennzeichnet, dass** die Datenumwandlungseinrichtung (2) umfasst:
eine bidirektionale digitale Schnittstelle (21) die über den digitalen Signalbus (C1) mit der Datenendgerät-Ausrüstung und über den ersten bidirektionalen Bus (C3) mit der Steuereinheit (3) verbunden ist, um die an seinen beiden Enden vorhandenen digitalen Signale physikalisch zu isolieren; und
eine bidirektionale analoge Schnittstelle (22), die über den analogen Signalbus (C2) mit der Datenendgerät-Ausrüstung und über einen dritten bidirektionalen Bus (C4) mit mindestens einem Modem (23, 24) verbunden ist, mit dem Ziel, die analogen Informationssignale, die auf dem dritten bidirektionalen Bus (C4) vorhanden sind, in digitale Signale auf einem vierten bidirektionalen Bus (C5) umzuwandeln und umgekehrt, wobei dieser vierte bidirektionale Bus (C5) einen Teil des ersten bidirektionalen Busses (C3) bildet.

3. Kommunikationsadapter nach Anspruch 2, **dadurch gekennzeichnet, dass** die bidirektionale analoge Schnittstelle (22) umfasst:
Mittel zum Auswählen der Übertragungsrichtung an der entfernten Endgeräteeinheit (RLA), die ein Übertragungssteuersignal (RTSA) zur entfernten Endgeräteeinheit hin empfangen, das Teil des ersten bidirektionalen Busses (C3) bildet und das wiederum die Position eines offenen oder geschlossenen Kontakts als Angebe des Sende- oder Empfangszustandes und eines normalerweise offenen Kontaktes bestimmt, der sich schließt, wenn das Übertragungssteuersignal; (RTSA) zur entfernten Endgeräteeinheit hin angibt, dass die Übertragung zu dieser Einheit hin geht;
einen ersten Verstärker (A1), der das zur entfernten Endgeräteeinheit hin zu sendende analoge Signal (TCM), das von irgendeinem der in der Datenumwandlungseinrichtung (2) eingeschlossenen Modems (23, 24) kommt, verstärkt;
einen ersten Übertrager (TF1), der das vom Ausgang des ersten Verstärkers (A1) kommende Signal empfängt und dessen Ausgang über ein Drähtepaar mit der entfernten Endgeräteeinheit verbunden ist; und
einen zweiten Übertrager (TF2), der das von der entfernten Endgeräteeinheit kommende Signal empfängt und dessen Ausgang mit dem Eingang eines zweiten Verstärkers (A2) verbunden ist, der das Signal an seinem Eingang verstärkt und an seinem Ausgang ein Signal (RCM) erzeugt, das zu jedem der in der Datenumwandlungseinrichtung (2) eingeschlossenen Modems (23, 24 gesendet wird.

4. Kommunikationsadapter nach Anspruch 1, **dadurch gekennzeichnet, dass** die Steuereinheit (3) umfasst:
eine Mikrosteuerung (31), die über einen Teil der Signale auf dem ersten bidirektionalen Bus (C3) mit der Datenumwandlungseinrichtung (2) und über einen Teil des zweiten bidirektionalen Busses (C6) mit dem Modem und der Schnittstelle (4) für mittlere/niedrige Spannung verbunden ist, die dazu dient die Steuerfunktionen der Steuereinheit (3) auszuführen;
ein ROM-Speichermodul (32), ein RAM-Speichermodul (33) und ein Modul (34) mit Eingabe/Ausgabe-Einheiten, die alle über einen fünften bidirektionalen Bus (C8) mit der Mikrosteuerung (31) verbunden sind; und
ein Funktionsauswahlmodul (35), das mit dem Modul (34) mit Eingabe/Ausgabe-Einheiten verbunden ist, zum Konfigurieren des Systems entsprechend den im ROM-Speichermodul (32) gespeicherten Betiebsmodi.

5. Kommunikationsadapter nach Anspruch 1, **dadurch gekennzeichnet, dass** das Modem und die Schnittstelle (4) für mittlere/niedrige Spannung umfasst:
Mittel zum Auswählen der Übertragungsrichtung zum Verteilungsnetz hin (RLM), die ein Übertragungssteuersignal zum Verteilungsnetz hin (RTSM) empfangen und deren Ausgang einem Kontakt entspricht, der geschlossen ist, wenn über die Eingangs/Ausgangs-Anschlüsse (C7) eine Übertragung zum Verteilungsnetz hin vorgenommen wird;
einen Modulator (41), der das Übertragungssignal (TRSM) zum Verteilungsnetz hin, um den Modulator (41) zu aktivieren, und das zu sendende digitale Signal (TXM) empfängt, um einen Träger mit einer bestimmten Frequenz zu modulieren, wobei der Ausgangs des Modulators an einen dritten Verstärker (A3) angeschlossen ist, dessen Ausgang wiederum an einen dritten Kopplungsübertrager (TF3) angeschlossen ist, dessen Anschlüsse mit den Eingangs/ Ausgangs-Anschlüssen (C7) des Kommunikationsadapters verbunden sind;
einen vierten Übertrager (TF4), der das auf den Eingangs/Ausgangs-Anschlüssen (C7) vorhandene Signal empfängt;
wenigstens einen Bandpassfilter (F1, F2), der das vom vierten Übertrager (TF4) kommende Ausgangssignal empfängt, wobei jeder auf eine der möglichen vorher definierten Betriebsfrequenzen des Modulators auf der Seite der entfernten Datenendgerät-Ausrüstung eingestellt ist; und
einen vierten Verstärker (A4), der das von irgendeinem der Bandpassfilter (F1, F2) kommende gefilterte Signal verstärkt und dessen Ausgabe zu einem Demodulator (42) gesendet wird, der das vom Verstärker (A4) kommende Signal demoduliert und das empfangene digitale Datensignal (RXM) von der entfernten Endgerät-Ausrüstung wiederherstellt.

6. Kommunikationsadapter nach Anspruch 5, **dadurch gekennzeichnet, dass** der Modulator (41) eine Frequenzumtastungsmodulation, FSK, ausführt und der Modulator Signale der gleichen Art demoduliert.

7. Kommunikationsadapter nach Anspruch 1, **dadurch gekennzeichnet, dass** die Datenübertragung mittels asynchron übertragener Datenpakete ausgeführt wird.

8. Kommunikationsadapter nach Anspruch 1, **dadurch gekennzeichnet, dass** die Eingangs/Ausgangs-Anschlüsse (C7) über eine Kopplungseinrichtung mit dem Verteilungsnetz mit mittlerer/niedriger Spannung verbunden sind, um eine bessere Isolierung des elektrischen Verteilungsnetzes gegenüber dem Kommunikationsadapter zu erhalten.

## Revendications

1. Adaptateur de communications pour une transmission de données par des réseaux de distributions électriques basse et moyenne tension entre un équipement terminal de données ou une unité de télécommande distante située à une extrémité et un autre équipement terminal de données ou une unité similaire située à l'autre extrémité et **caractérisé :**
- **en ce qu'**il comprend un moyen de conversion de données (2) raccordé à une extrémité à l'équipement terminal de données et à l'autre extrémité à l'unité de commande (3) via un premier bus directionnel (C3), et qui convertit et adapte les signaux sur un bus analogique (C2) ou adapte les signaux sur le bus numérique (C1), pour les deux directions de transmission, échangées entre l'équipement terminal de données et l'unité de commande (3) ;
- **en ce que** l'unité de commande (3) est raccordée à un modem et une interface moyenne et basse tension (4) via un second bus directionnel (C6), et assemble les paquets de données à transmettre et désassemble les paquets de données reçus du réseau de distribution d'électricité basse/moyenne tension ; et
- **en ce que** le modem et l'interface de moyenne/basse tension (4) est raccordé au réseau de distribution électrique basse/moyenne tension via les bornes d'entrée/sortie (C7).

2. Adaptateur de communication selon la revendication 1, **caractérisé en ce que** le moyen de conversion de données (2) comprend :
- une interface numérique bidirectionnelle (21) qui est intégrée à l'équipement terminal de données via le bus de signal numérique (C1) et à l'unité de commande (3) via le premier bus bidirectionnel (C3), étant ainsi en mesure d'isoler physiquement les signaux numériques présents aux deux extrémités ; et
- une interface analogique bidirectionnelle (22) qui est intégrée à l'équipement terminal de données via le bus de signal analogique (C1) et au moins un modem (23, 24) via un troisième bus bidirectionnel (C4), ceux-ci étant destinés à convertir les signaux d'informations analogiques, présents sur le troisième bus bidirectionnel (C4), en signaux numériques sur un quatrième bus bidirectionnel (C5) et réciproquement, ce quatrième bus bidirectionnel (C5) faisant partie du premier bus bidirectionnel (C3).

3. Adaptateur de communication selon la revendication 2, **caractérisé en ce que** l'interface analogique bidirectionnelle (22) comprend :
un moyen pour sélectionner la direction de transmission sur l'unité terminale distante (RLA), qui reçoit un signal de commande de transmission destinée à l'unité terminale distante (RTSA), qui fait partie du premier bus directionnel (C3 ), et qui à son tour, détermine la position de contact ouvert ou fermé comme une indication de l'état d'envoi ou de réception, et un contact, normalement ouvert, qui ferme lorsque le signal de commande de transmission vers l'unité terminale distante (RTSA) indique que la transmission est vers cette unité ;
- un premier amplificateur (A1) qui amplifie le signal analogique à envoyer (TCM) vers l'unité terminale distante venant d'un quelconque des modems (23, 24) compris dans le moyen de conversion (2) ;
- un premier transformateur (TF1) qui reçoit le signal venant de la sortie du premier amplificateur (A1) et dont la sortie est raccordée à l'unité terminale distante via une paire de fils ; et
un second transformateur (TF2) qui reçoit le signal venant de l'unité terminale distante et dont la sortie est raccordée à l'entrée d'un second amplificateur (A2) qui amplifie le signal sur son entrée et produit un signal sur sa sortie (RCM) qui est envoyé à un quelconque des modems (23, 24) compris dans le moyen de conversion de données (2).

4. Adaptateur de communication selon la revendication 1, **caractérisé en ce que** l'unité de commande (3) comprend :
- un microcontrôleur (31) qui est intégré au moyen de conversion de données (2) via une partie des signaux sur le premier bus directionnel (C3), et au modem et à l'interface de moyenne/basse tension (4 ) via une partie du second bus bidirectionnel (C6), servant à réaliser les fonctions de commande de ladite unité de commande (3) ;
- un module de mémoire ROM (32), un module de mémoire RAM (33), et un module des unités d'entrée/sortie (34) dont toutes sont raccordées au microcontrôleur (31) via un cinquième bus bidirectionnel (C8) ; et
un module de sélection de fonction (35) raccordé au module des unités d'entrée/sortie (34) pour configurer le système selon les modes opérationnels stockés dans le module de mémoire ROM (32).

5. Adaptateur de communication selon la revendication 1, **caractérisé en ce que** le modem et l'interface de moyenne/basse tension (4) comprend :
- un moyen pour sélectionner la direction de transmission vers le réseau de distribution (RLM) qui reçoit un signal de commande de transmission vers le réseau de distribution (RTSM) et dont la sortie correspond à un contact qui est fermé lorsque la transmission est faite vers le réseau de distribution sur les bornes d'entrée/sortie (C7) ;
- un modulateur (41) qui reçoit le signal de commande de transmission vers le réseau de distribution (RTSM), afin d'activer le modulateur (41), et le signal numérique à envoyer (TXM) pour moduler une porteuse d'une fréquence déterminée, la sortie du modulateur étant appliquée à un troisième amplificateur (A3), dont la sortie est à son tour appliquée à un troisième transformateur de couplage (TF3) dont les bornes sont raccordées aux bornes d'entrée/sortie (C7) de l'adaptateur de communication
- un quatrième transformateur (TF4) qui reçoit le signal présent sur les bornes d'entrée/sortie (C7) ;
- au moins un filtre passe-bande (F1, F2) qui reçoit le signal de sortie venant du quatrième transformateur (TF4), chacun accordé sur une des fréquences de fonctionnement possible définies préalablement, du modulateur du côté de l'équipement terminal de données distant ; et
- un quatrième amplificateur (A4) qui amplifie le signal filtré venant d'un quelconque des filtres passe-bande (F1, F2) et dont la sortie est envoyée à un démodulateur (42) qui démodule le signal venant de l'amplificateur (A4) et qui récupère le signal de données numériques reçu (RXM) de l'équipement terminal de données distant.

6. Adaptateur de communication selon la revendication 5, **caractérisé en ce que** le modulateur (41) réalise une modulation de déplacement de fréquence (FSK), et le démodulateur (42) démodule des signaux du même type.

7. Adaptateur de communication selon la revendication 1, **caractérisé en ce que** la transmission de données est réalisée au moyen de paquets de données transmis de façon asynchrone.

8. Adaptateur de communication selon la revendication 1, **caractérisé en ce que** les bornes d'entrée/sortie (C7) sont raccordées au réseau de distribution moyenne/basse tension via un dispositif de couplage afin d'obtenir une meilleure isolation du réseau de distribution électrique par rapport à l'adaptateur de communication.
